Europäisches Patentamt

(19) European Patent Office

Office européen des brevets

(11) Numéro de publication : **0 341 254 B1**

# (12) FASCICULE DE BREVET EUROPEEN

(45) Date de publication du fascicule du brevet :
**10.04.91 Bulletin 91/15**

(51) Int. Cl.⁵ : **G01S 13/74**

(21) Numéro de dépôt : **88900826.4**

(22) Date de dépôt : **06.01.88**

(86) Numéro de dépôt international :
**PCT/FR88/00009**

(87) Numéro de publication internationale :
**WO 88/05546 28.07.88 Gazette 88/17**

(54) SYSTEME ET BALISE D'IDENTIFICATION ET/OU DE LOCALISATION.

(30) Priorité : **19.01.87 FR 8700627**

(43) Date de publication de la demande :
**15.11.89 Bulletin 89/46**

(45) Mention de la délivrance du brevet :
**10.04.91 Bulletin 91/15**

(84) Etats contractants désignés :
**AT BE CH DE FR GB IT LI LU NL SE**

(56) Documents cités :
**EP-A- 0 172 445**
**GB-A- 2 152 335**
**US-A- 2 352 807**
**US-A- 2 551 664**
**US-A- 3 707 711**
**US-A- 4 063 229**
**US-A- 4 123 754**
**US-A- 4 155 091**

(56) Documents cités :
**Electronics Letters, vol. 9, No: 25, 1973, (Hitchin, Herts, GB) D.E.N. Davies et al.:
"Two-frequency secondary radar incorporating passive transponders", pages 592, 593, see the whole document (cited in the application)
Funkschau, vol. 48, No.: 6, March 1976, (Munich, DE) A. Richtscheid "Elektronische "Lawinenhunde"", pages 212-214, see pages 212, 213, paragraphe: "Sekundärradargerät mit passivem Reflektor"; figure 1**

(73) Titulaire : **MIDI ROBOTS, Société Anonyme
20, Rue des Frères-Lumière Zone Artisanale Nord
F-31520 Ramonville-Saint-Agne (FR)**

(72) Inventeur : **BRIEUSSEL, Jean-Marie
30, rue Salgues
F-31500 Toulouse (FR)**
Inventeur : **DAVID, Jacques
Route de Lavaur
F-31380 Montastruc-la-Conseillère (FR)**

(74) Mandataire : **Azais, Henri et al
c/o CABINET BEAU DE LOMENIE
"Prado-Mermoz" 232, Avenue du Prado
F-13008 Marseille (FR)**

EP 0 341 254 B1

## Description

L'invention concerne un système d'identification et/ou de localisation, à distance, de balises dans un espace. Elle peut notamment être mise en oeuvre pour déterminer la direction relative d'une balise à partir d'un point de l'espace ou pour localiser un objet par rapport à plusieurs balises de positions connues. Elle s'étend à une nouvelle structure de balise appelée à équiper ledit système d'identification et/ou de localisation. Par "identification", on entend aussi bien la détection de la présence d'une balise, que la reconnaissance d'un état prédéterminé de celle-ci ou que l'identification de celle-ci dans un groupe donné.

L'invention peut en particulier être appliquée pour le repérage absolu d'engins mobiles dans un espace pourvu de balises fixes (engins mobiles autonomes...), le repérage de personnes en détresse préalablement munies d'une balise (naufragés, personnes ensevelies ou égarées), l'identification d'objets munis de balises par étiquetage (véhicules, wagons, conteneurs, marchandises...), etc.

Il existe essentiellement trois catégories de système d'identification et/ou de localisation à distance, qui sont aptes à assurer une interrogation de balise et à analyser la réponse en vue d'effectuer une identification et/ou une localisation. Par "balise", on entend tout dispositif apte à renvoyer une réponse identifiable lorsqu'il est excité de façon appropriée.

Une première catégorie de systèmes, très nombreux, comporte des balises actives, dotées d'une source d'alimentation propre (balise "Argos", brevet FR n° 2 295 434...). Les défauts essentiels de ces systèmes proviennent de la présence obligatoire de la source d'alimentation (entretien, risque de panne, encombrement et poids) et généralement de leur complexité et de leur coût. Ces systèmes sont totalement incompatibles avec la réalisation de dispositifs bon marché, de grande diffusion (étiquettes identifiables ou localisables), ou de dispositifs exigeant un stockage prolongé et non défini dans le temps (repérage de sécurité), ou de dispositifs impliquant un grand nombre de balises (multiplication des opérations d'entretien, coût, encombrement).

Dans une deuxième catégorie de systèmes, les balises sont passives, c'est-à-dire non dotées d'alimentation propre, mais comprennent des composants actifs qui sont alimentés à travers un transformateur d'énergie, par le signal d'excitation provenant de l'ensemble interrogateur. Les brevets FR n° 2 444 945, 2 442 452, 2 260 115, 2 552 886, 2 552 829... illustrent ce type de systèmes. Les balises de ces systèmes sont équipées de moyens électroniques, plus ou moins complexes, destinés à assurer diverses fonctions spécifiques dépendant du but recherché et ces moyens sont alimentés par l'énergie du signal d'excitation reçu en entrée. Le défaut commun de tous ces systèmes réside dans le niveau d'énergie élevé que doit posséder le signal d'excitation émis, pour mettre en état d'activité les balises. Ces systèmes conduisent soit à des ensembles interrogateurs de puissances très élevées, soit à des dispositifs de portées réduites ne dépassant pas quelques mètres. De plus, la présence de moyens de conversion d'énergie et de fonctions électroniques rend ces systèmes généralement nettement plus complexes que ceux de la troisième catégorie. Ce facteur d'augmentation des coûts est très pénalisant pour des systèmes de grande diffusion.

Les systèmes de la troisième catégorie comprennent des balises purement passives, c'est-à-dire qui rayonnent directement un signal image du ou des signaux reçus sans traitement électronique (absence de tout composant devant être alimenté). Ces systèmes ont en général l'avantage, d'une part, d'autoriser des portées beaucoup plus grandes que les précédentes, avec des puissances d'interrogation réduites, d'autre part, de bénéficier de structures simples (et donc de faibles coûts, en raison de l'absence de circuits électroniques au niveau des balises). Ce dernier avantage est essentiel en pratique pour des systèmes exigeant la présence d'un grand nombre de balises (étiquettes,...).

L'invention vise un système entrant dans cette dernière catégorie.

Dans cette catégorie, plusieurs brevets décrivent des systèmes dans lesquels la balise réémet une onde de même fréquence que celle émise par l'ensemble interrogateur, cette onde réémise étant exploitée par cet ensemble afin de détecter la présence de la balise : brevets FR n° 2 386 050, 2 445 039, 2 229 598, 2 272 542 et brevet US n° 4 023 167. Le problème soulevé par ce type de système provient de l'identité entre l'écho et l'onde émise, cette dernière perturbant l'écho et rendent une discriminination difficile au niveau de l'ensemble interrogateur. Des solutions techniques ont été proposées pour assurer cette discrimination (vobulation de l'onde émise et/ou analyse spectrale de le réponse), mais il s'ensuit une complexité plus grande de l'ensemble interrogateur, et une rigidité d'utilisation non admissible dans beaucoup d'applications (plage étroite de distances entre balise et ensemble interrogateur). De plus, une ambiguité subsiste toujours et, dans ces systèmes, l'identification est peu fiable car un écho accidentel peut être engendré par d'autres objets.

Les brevets US n° 3.781.879, n° 4.188.629, n° 4.123.754, n° 3.798.642, FR n° 2 256 416 décrivent des systèmes dans lesquels le défaut précédent est supprimé en réémettant, au niveau de la balise, non pas l'onde fondamentale reçue, mais un harmonique de celle-ci, de façon à renvoyer vers l'ensemble interrogateur une onde de fréquence différente de celle émise. Cette onde est ainsi plus facile à discriminer. Toutefois, cette solution comporte deux défauts essentiels. En premier lieu, un harmonique réémis par une balise passive pure possède une puissance très inférieure à celle de l'onde fondamentale (−10 à −20 dbs pour l'harmonique 2), et nécessite une puissance d'excitation plus élevée pour que cet harmonique soit significativement détectable. En outre, quelles que soient les précautions prises, l'émission d'une onde de fréquence donnée s'accompagne généralement d'une émission d'harmoniques qui peuvent donc venir perturber les échos significatifs et réduire la fiabilité du système. Ce deuxième défaut est corrigé dans le système décrit dans le brevet US n° 3 781 879 en amenant la balise à réémettre un harmonique de polarisation croisée par rapport à l'onde de base, de sorte que l'écho significatif est plus facile à distinguer des échos parasites. Toutefois, cette solution entraîne une grave contrainte en pratique : l'orientation respective balise/ensemble interrogateur doit être fixée de façon relativement précise, ce qui est incompatible avec la plupart des applications (repérage de balises à position aléatoire).

L'article "ELECTRONICS LETTERS", vol. 9, n° 25, 1973, pages 592, 593, Hitchin, Herts, CB, D.E.N. DAVIES et al : "Two-frequency secondary radar incorporating passive transpondeurs" et le brevet DE n° 2.352.807 décrivent un système dans lequel deux ondes de base sont émises par l'interrogateur, ces ondes étant mélangées dans un transpondeur pour réémettre une onde corrélée de fréquence égale à la somme ou la différence des fréquences de base. Cette solution paraît satisfaisante car elle supprime les défauts précités des autres solutions mettant en oeuvre des balises purement passives. Toutefois, les balises utilisées comportent des circuits LC dont les coûts et encombrements sont parfaitement compatibles avec des applications du type de celles indiquées dans ces documents (contrôle aérien d'aéronefs, recherche de personnes), mais la structure de ces balises les rend difficilement utilisable dans le cas d'applications plus triviales, notamment étiquetage de produits bons marchés, système de localisation nécessitant de très nombreuses balises, etc...

La présente invention se propose de fournir un système de cette dernière catégorie qui utilise le mélange de deux fréquences pour effectuer l'identification ou la localisation de la balise.

Un objectif essentiel de l'invention est de fournir un système dans lequel les balises présentent une structure très simplifiée par rapport à celles des systèmes connus, leur coût et leur encombrement étant compatibles avec une large diffusion de celles-ci, cependant que leur rusticité et leurs faibles dimensions en autorisent l'utilisation dans des applications les plus diverses et les plus courantes.

Un autre objectif est de fournir un système dans lequel les réponses de balises ne subissent aucune perturbation de la part des émissions de l'ensemble interrogateur et sont facilement discriminées par celui-ci.

Un autre objectif est de fournir un système bénéficiant d'un compromis très favorable portée/puissance.

Un autre objectif est de permettre la mise en oeuvre d'un grand nombre de balises passives différentiables les unes des autres.

Un autre objectif est de fournir un système bénéficiant d'une grande souplesse d'utilisation, exempt notamment de contraintes de positionnement ou d'orientation des balises par rapport à ou aux ensembles interrogateurs.

A cet effet, le système d'identification et/ou de localisation visé par l'invention est doté d'au moins un ensemble interrogateur et d'au moins une balise, présentant les caractéristiques suivantes :

● chaque balise comprend, d'une part, un système d'antenne de réception et de réémission adapté pour recevoir au moins deux premières ondes de base de fréquences différentes ($F_1$, $F_2$) et pour réémettre au moins une troisième onde de fréquence ($F_3$) corrélée aux fréquences desdites ondes de base, mais différente desdites fréquences, d'autre part un mélangeur de fréquence comportant une diode, couplé audit système d'antenne et apte à mélanger au moins deux signaux correspondant auxdites premières ondes de base ($F_1$, $F_2$) pour délivrer vers ledit système d'antenne un signal de fréquence corrélée $F_3$,

● chaque ensemble-interrogateur comprend des moyens d'émissions simultanées desdites moins deux premières ondes de base de fréquences différentes ($F_1$, $F_2$), des moyens de réception et de détection d'au moins ladite troisième onde de fréquence corrélée ($F_3$), et une unité de contrôle et de calcul pour le traitement du signal issu des moyens de réception et de détection.

Selon la présente invention, d'une part le système d'antenne de chaque balise est constitué de boucles conductrices distinctes de dimensions adaptées pour former des circuits résonnants respectivement accordés sur les fréquences de base ($F_1$, $F_2$) et corrélée ($F_3$), et d'autre part, la diode est reliée à toutes les boucles conductrices qui se referment sur ladite diode, de façon à constituer le mélangeur des fréquences de base ($F_1$, $F_2$) et à délivrer ce mélange dans la boucle accordée sur la fréquence corrélée ($F_3$) en vue de la réémission de l'onde de fréquence corrélée ($F_3$).

Ainsi chaque balise se réduit à plusieurs fils conducteurs refermés en boucle sur une diode commune, chaque fil conducteur étant dimensionné pour constituer un circuit résonnant en l'absence de tout composant électronique tel que self ou capacité. Cette structure extrêmement simple et peu coûteuse permet la réalisation de balise à des coûts extrêmement bas, pratiquement constitués par le prix de la diode. Par exemple, pour une application de localisation d'un produit grâce à une étiquette fixée sur celui-ci, les fréquences de base utilisées peuvent être de l'ordre de quelques gigahertz à quelques dizaines de gigahertz, conduisant à des longueurs de boucles de l'ordre du centimètre, soit des diamètres de l'ordre du demi-centimètre.

L'invention est applicable pour détecter la présence ou le passage d'une balise dans un espace donné, par exemple présence d'une balise-étiquette, présence d'un objet ou d'une personne munie d'une balise, passage d'un mobile dans un espace. Elle peut également être appliquée pour reconnaître un état prédéterminé d'une balise apte à présenter plusieurs états : état dans lequel elle réémet la fréquence $F_3$, états sans réémission (le passage d'un état à un autre pouvant être assuré par quelque phénomène que ce soit, externe ou interne à la balise). L'invention peut également être appliquée, comme on le verra plus loin, pour identifier une balise dans un groupe donné, localiser ladite balise ou s'orienter par rapport à plusieurs d'entre elles.

De préférence, les ondes de base de fréquence ($F_1$, $F_2$) émises simultanément par l'ensemble interrogateur sont telles que $|F_1-F_2| < F_1$ et $F_2$, la balise étant adaptée pour délivrer et réémettre un signal de mélange $F_3$ constitué par la différence de signaux reçus $F_3 = |F_1-F_2|$. Ainsi l'onde corrélée possède une fréquence $F_3$ qui est inférieure aux fréquences de base $F_1$ ou $F_2$ de sorte qu'aucun harmonique de quelque ordre qu'il soit n'est susceptible d'interférer avec cette onde corrélée.

Les deux fréquences de base $F_1$ et $F_2$ peuvent n'avoir aucune corrélation entre elles ; dans ce cas, la balise comprend trois boucles résonnantes accordées sur les fréquences de base $F_1$, $F_2$ et sur la fréquence corrélée $F_3 = |F_1-F_2|$. Il est également possible de choisir ces fréquences de base de façon que $F_1 = n_1 F_3$ et $F_2 = n_2 F_3$ où $n_1$ et $n_2$ sont des entiers différents. Dans ce cas, la balise peut se simplifier à l'extrême en prévoyant des circuits résonnants communs à deux de ces fréquences (résonance dans des rapports d'harmoniques). La balise est alors constituée par deux boucles résonnantes de tailles différentes se refermant sur la diode mélange commune, les longueurs de deux boucles étant des multiples entiers d'une même longueur de façon à former des circuits résonnants accordés sur les fréquences de base $F_1$, $F_2$ et fréquence corrélée $F_3$, liées par les relations sus-évoquées.

De préférence, un résonateur diélectrique à coefficient de surtension élevé est couplé à la boucle résonnante accordée sur une des fréquences de base ($F_2$). Ce résonateur diélectrique (constitué par un composant très bon marché) permet d'améliorer la sélectivité de la balise à l'égard de la fréquence de base concernée ($F_2$) et, en conséquence, d'accroître l'acuité fréquentielle de l'onde corrélée réémise ($F_3$). Dans le cas d'un grand nombre de balises, celles-ci sont ainsi plus facilement différentiables.

L'invention s'étend, en tant que telle, à une balise telle que définie plus haut, en particulier à une balise comprenant deux ou trois boucles conductrices résonnantes se refermant sur une diode mélangeuse commune.

Selon un mode de réalisation préféré desdites balises, un réflecteur d'ondes est associé à chaque boucle et disposé parallèlement au plan de ladite boucle à une distance de celle-ci telle que l'onde réfléchie par le réflecteur soit en phase avec l'onde directe. Ainsi, on améliore le gain de la balise sur une demi-sphère et l'on élimine toute perturbation provenant des supports sur lesquels ladite balise se trouve appliquée.

L'invention exposée ci-dessus dans sa forme générale est illustrée dans la description qui suit en référence aux dessins annexés qui en présentent des exemples de réalisation ; sur ces dessins :
   – la figure 1 est un schéma synoptique fonctionnel du système d'identification et de localisation conforme à l'invention,
   – la figure 2 est un mode de réalisation de balise en vue de face,
   – la figure 3 est une coupe axiale, par un plan AA', de ladite balise,
   – les figures 4 et 5, sont des vues analogues (vue de face et coupe axiale) d'un autre mode de réalisation de balise,
   – la figure 6 illustre le procédé de localisation conforme à l'invention au moyen de trois balises,
   – la figure 7 illustre le procédé d'identification d'une balise interrogée par deux ensembles interrogateurs distincts.

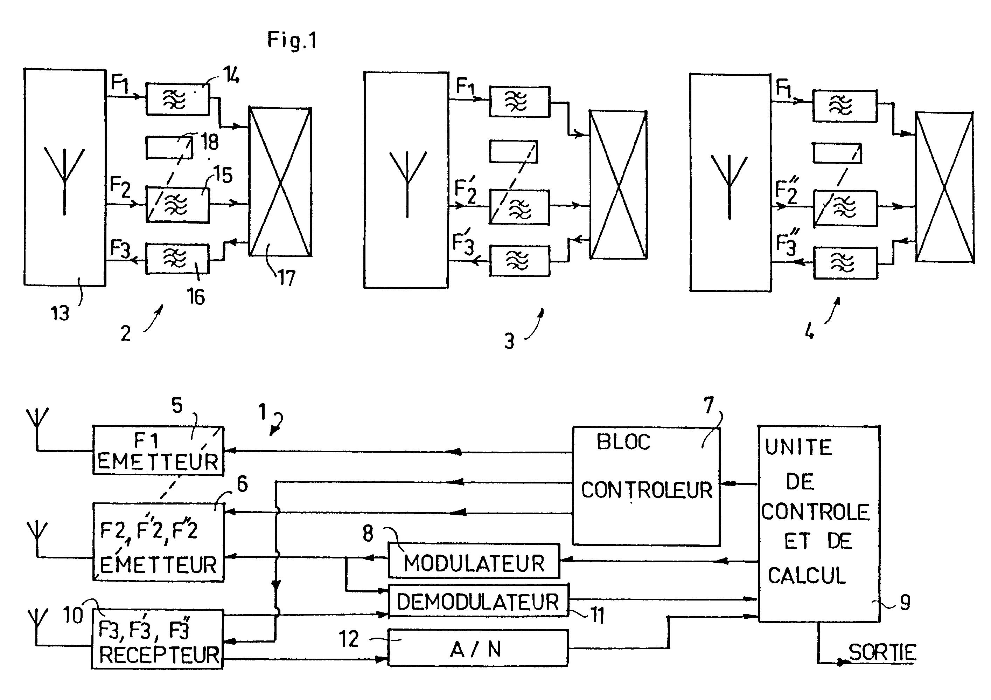

Le système représenté en exemple à la figure 1 comprend un ensemble interrogateur 1 et plusieurs balises purement passives distinctes, en l'exemple au nombre de trois, 2, 3 et 4, qui seront décrites plus loin.

L'ensemble interrogateur est doté de deux émetteurs radiofréquences couplés 5 et 6, en l'exemple omnidirectionnels. Ces émetteurs sont couplés par l'entremise d'un bloc contrôleur 7 afin d'émettre simultanément deux ondes de fréquences différentes $F_1$, $F_2$. L'émetteur 5 est un émetteur à fréquence fixe constituée par la fréquence la plus élevée $F_1$. L'autre émetteur est un émetteur à fréquence réglable, adapté pour générer plusieurs fréquences ($F_2$, $F'_2$, $F''_2$...) à la commande du bloc contrôleur.

Ainsi, les émetteurs 5 et 6 sont aptes à émettre simultanément à un instant donné, un couple de fréquences $F_1$, $F_2$ différentes, ce couple pouvant être modifié à l'instant suivant par un réglage approprié de la fréquence $F_2$, $F'_2$... du second émetteur 6 (la fréquence $F_1$ étant commune à tous les couples).

La bande des fréquences d'émission des émetteurs 5 et 6 peut en particulier s'étendre sur une décade, notamment bandes des hyperfréquences.

Les émetteurs 5 et 6 sont en l'exemple ajustés de façon que les fréquences $F_1$ et $F_2$ soient non corrélées

et satisfassent à la relation :

$$F_1 > F_2$$
$$\text{et } F_2 > F_1 - F_2 \text{ soit } F_2 > F_{1/2}$$

Ainsi, la différence de fréquence $F_3 = F_1 - F_2$ est inférieure à la plus petite fréquence d'émission ($F_2$) et ne peut donc coïncider avec un harmonique des fréquences $F_1$ et $F_2$.

En outre, en l'exemple représenté, un modulateur 8 est associé à l'émetteur 6 pour assurer une modulation de chaque fréquence $F_2$, $F'_2$... Cette modulation peut être une modulation de fréquence ou d'amplitude.

Ce modulateur 8 et le bloc contrôleur 7 sont contrôlés par une unité de contrôle et de calcul 9 qui synchronise les émetteurs 5 et 6, déclenche les émissions et les changements de fréquences $F_2$, $F'_2$ et les changements de modulation de ces fréquences.

L'ensemble interrogateur comprend en outre un récepteur radiofréquence 10, en l'exemple omnidirectionnel, apte à recevoir une bande de fréquence contenant toutes les fréquences $F_3$, dites fréquences corrélées, constituées par les différences $F_1$-$F_2$, $F_1$-$F'_2$, $F_1$-$F''_2$...

Ce récepteur est asservi en fréquence par le bloc contrôleur 7 de façon à se positionner sur la fréquence $F_3 = F_1$-$F_2$, $F'_3 = F_1$-$F'_2$ ou $F''_3 = F_1$-$F''_2$, en correspondance avec la fréquence $F_2$, $F'_2$ ou $F''_2$... sur laquelle l'émetteur 6 est en cours d'émission.

Le récepteur 10 possède une sortie basse fréquence délivrant un signal de modulation représentatif de la modulation du signal reçu, et une autre sortie, délivrant un signal continu représentatif de l'amplitude du signal reçu.

La sortie basse fréquence est reliée à un démodulateur 11 qui compare le signal de modulation à la modulation de l'onde $F_2$ émise en vue de délivrer vers l'unité 9 un signal de correspondance lorsque ces modulations coïncident.

L'autre sortie délivrant le signal d'amplitude est reliée à un convertisseur analogique/numérique 12 en vue de numériser ce signal d'amplitude.

Les signaux de correspondance et signaux numérisés sont traités dans l'unité 9 pour délivrer en sortie un signal de présence lorsque :
– un signal de correspondance apparaît, mettant en évidence, à l'instant considéré, une identité de modulation entre l'émission $F_2$ et la réception $F_3$,
– le signal numérisé est supérieur à un seuil prédéterminé, indiquant une réémission significative de la balise à identifier.

Par ailleurs, chaque balise 2, 3, 4 est caractérisé par un couple de fréquence $F_1$, $F_2$ ; $F_1$, $F'_2$ ; $F_1$, $F''_2$,... et est adaptée pour émettre une fréquence $F_3$, $F'_3$, $F''_3$ égale à la différence des fréquences du couple qui la caractérise.

Sur le plan fonctionnel, chaque balise comprend un système d'antenne de réception et de réémission accordé sur les fréquences de base $F_1$, $F_2$ et corrélée $F_3$ caractéristiques de la balise. Ce système a été décomposé à la figure 1 pour séparer les fonctions en une antenne 13 et des résonateurs 14, 15 et 16 accordés respectivement sur les trois fréquences $F_1$, $F_2$, $F_3$. Les résonateurs 14 et 15 accordés sur les fréquences $F_1$, $F_2$ sont reliés à un mélangeur 17 qui délivre vers l'autre résonateur un signal de fréquence $F_3$ égale à la différence des fréquences reçues. Ce signal de fréquence $F_3$ est réémis par l'antenne 13. En l'exemple, un résonateur diélectrique à coefficient de surtension élevé 18 est associé au résonateur 15 (fréquence $F_2$) en vue d'accroître la sélectivité de la balise. On verra plus loin la structure des balises, caractéristique de l'invention.

Les balises ayant des fréquences de réémission différente les unes des autres, c'est-à-dire, soit des boucles de tailles différentes, soit des résonateurs diélectriques 18 différents (comme on le verra plus loin), sont identifiées par l'ensemble-interrogateur 1 lorsque la fréquence correspondante $F_3$, $F'_3$, $F''_3$... est détectée par le récepteur 10 de celui-ci.

Comme on le verra plus loin, le système peut comprendre plusieurs ensembles-interrogateurs, émettant simultanément avec des modulations différentes. La démodulation au niveau de chacun de ceux-ci permet d'affecter à chaque ensemble-interrogateur l'éventuel signal de présence issu de sa propre interrogation.

Le système conforme à l'invention permet donc de détecter la présence d'un objet donné muni d'une balise ; l'objet peut le cas échéant porter plusieurs balises correspondant à un code de réémission ($F_3$, $F'_3$, $F''_3$...) de sorte que la détection de présence de toutes ces balises fournit une identification de l'objet après décodage. Les applications d'un tel système sont multiples : tri d'objets, étiquetage, recherche de personnes en détresse, identification d'une personne dans un groupe... Ces applications sont possibles à moindre coût en raison de la structure extrêmement simple des balises, qui est décrite ci-après.

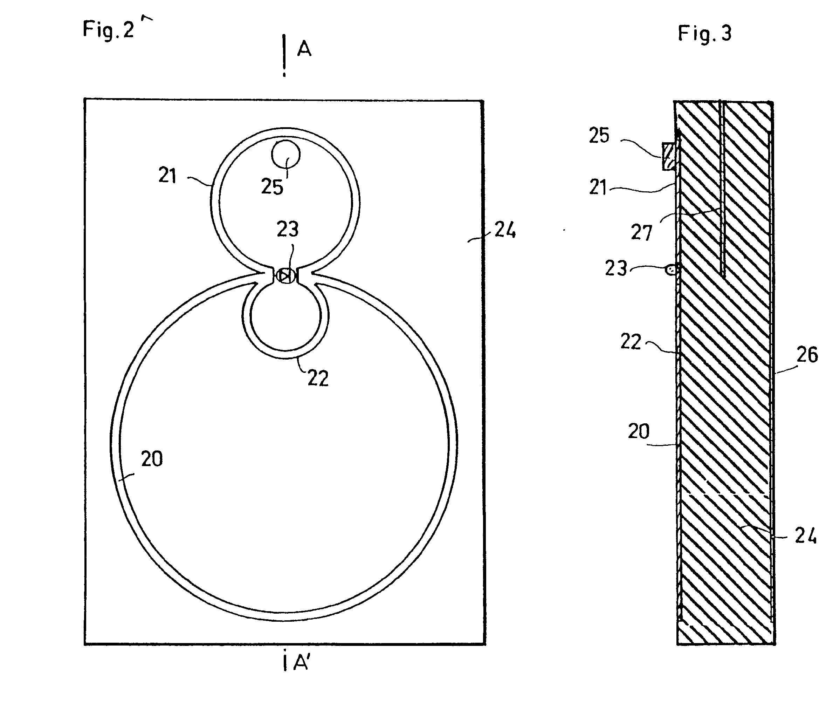

Les figures 2 et 3 représentent un mode de réalisation de balise en vue de face et coupe axiale.

Celle-ci comprend trois boucles conductrices distinctes 20, 21 et 22, faisant office d'antenne 13 et de circuits résonnants 14, 15 et 16. Ces boucles sont reliées par deux connexions communes à une diode 23 qui fait office de mélangeur 17. Cette balise est exempte de tout composant self ou capacité.

Les trois boucles ont des longueurs $L_1$, $L_2$ et $L_3$ respectivement liées à la fréquence $F_1$, à la fréquence $F_2$ et à la différence de fréquences $F_3 = F_1\text{-}F_2$ de façon que les circuits résonnants qu'elles forment soient accordés sur ces valeurs de fréquence. (Ces longueurs $L_1$, $L_2$, $L_3$ sont voisines d'un nombre entier des longueurs d'ondes correspondant aux fréquences concernées).

Ces boucles conductrices peuvent être constituées par des gravures de circuit imprimé, collé sur un support diélectrique 24 et sur lequel est rapportée la diode 23. Un disque résonateur diélectrique 25 est collé au voisinage de la boucle 21 en vue de faire office de résonateur à coefficient de surtension élevé 18.

En outre, des réflecteurs d'ondes 26 et 27 sont intégrés dans le support 24, parallèlement au plan commun des boucles, à distances telles que les ondes réfléchies soient en phase avec les ondes directes (distance entre boucle et réfelcteur égale à $(2n + 1)\frac{\lambda}{4}$, où $\lambda$ est la longueur d'onde de l'onde concernée dans le diélectrique et n un nombre entier).

En l'exemple, le réflecteur 26 est constitué par une feuille d'aluminium collée sur la face arrière du support 24, pour jouer le rôle de réflecteur pour les deux boucles 20 et 22. Ceci est possible grâce à un choix approprié des fréquences $F_1$ et $F_2$ (relation $F_2 = 2F_1 (\frac{n-m}{2\,n+1})$ m entier < n).

Le réflecteur 27 est une feuille d'aluminium incluse dans le support 24 à la distance appropriée de le boucle 21 (liée à la fréquence $F_2$).

Il est à noter que les réflecteurs 26 et 27 peuvent le cas échéant être remplacés par un seul réflecteur placé dans une position intermédiaire. Un tel compromis conduit à une simplification sans altérer de façon trop importante les performances.

On conçoit la simplicité structurelle d'une telle balise qui ne comprend qu'un seul composant semiconducteur et ne requiert aucune source d'alimentation (propre ou provenant du signal d'entrée).

Les dimensions de cette balise sont fonction des fréquences et, pour les bandes d'hyperfréquence, sont de l'ordre du centimètre en diamètre et de quelques millimètres en épaisseur.

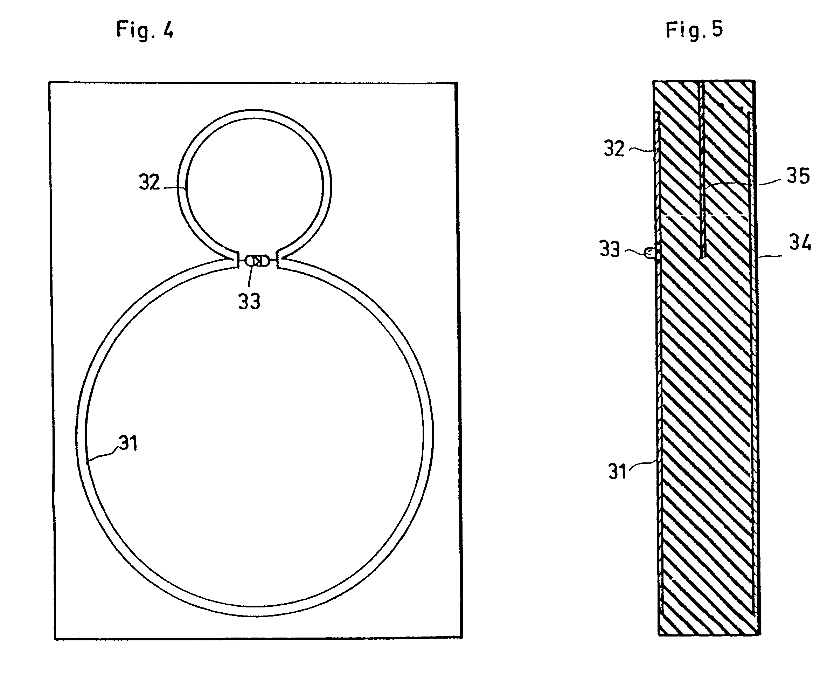

Les figures 4 et 5 présentent un autre mode de réalisation de balise. Cette balise comprend deux boucles de tailles différentes 31 et 32 se refermant comme précédemment, sur une diode mélangeuse 33. Les longueurs $L'_1$ et $L'_2$ des deux boucles sont des multiples entiers d'une même longueur, les frequences de résonance $F_1$, $F_2$ et $F_3$ étant liées par les relations :

$$n_2 F_1 = n_1 F_2$$
$$F_3 = F_1 - F_2 = \frac{(n_1 - n_2)F_1}{n_1} = \frac{(n_1 - n_2)F_2}{n_2}$$

où $n_1$ et $n_2$ sont des entiers différents tels que $n_2 < n_1 < 2n_2$

La boucle 31 est accordée sur la fréquence $F_3$ (la plus faible), l'autre boucle 32 est accordée sur l'une des fréquences $F_1$ (ou $F_2$). Une des deux boucles est en outre apte à résonner (en mode harmonique) pour l'autre fréquence $F_2$ (ou $F_1$),

Comme précédemment, chaque boucle est dotée d'un réflecteur 34 ou 35 (ou d'un seul réflecteur en position intermédiaire).

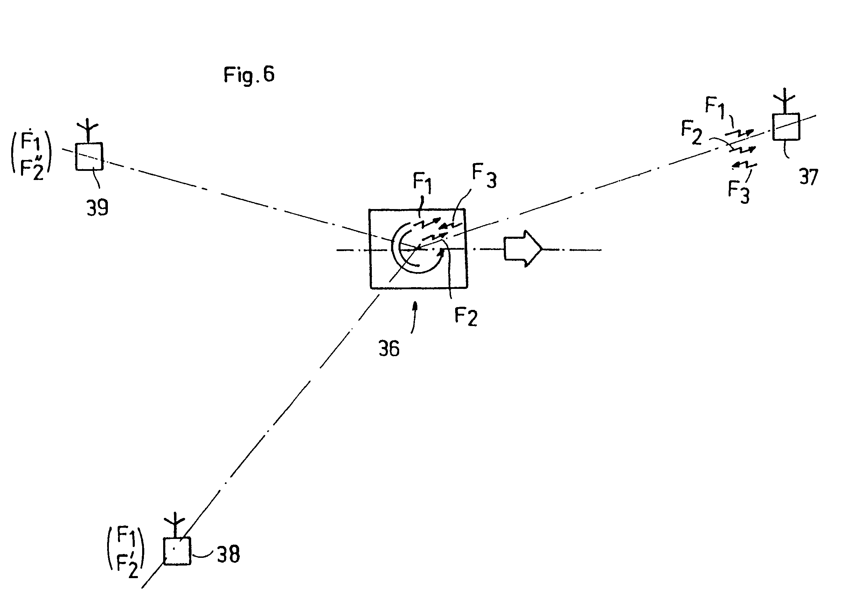

La figure 6 illustre l'utilisation du système pour localiser un objet équipé d'un ensemble interrogateur symbolisé en 36 à cette figure, grâce à trois balises 37, 38 et 39 de positions connues.

Chaque balise se caractérise par un couple de fréquence $(F_1, F_2)$, $(F_1, F'_2)$ ou $(F_1, F''_2)$, différent d'une balise à l'autre, et donc, par une fréquence de réémission différente $F_3 = F_1\text{-}F_2$, $F'_3 = F_1\text{-}F'_2$ ou $F''_3 = F_1\text{-}F''_2$ (taille différente de la ou des boucles accordées sur les fréquences $F_2$ et $F_3$ ou dans le cas de fréquences proches, résonateurs différents associés à des boucles identiques).

Ces couples de fréquence sont émis par l'ensemble-interrogateur selon toutes les directions de l'espace, en particulier grâce à une antenne directive, animée d'un mouvement de rotation de façon à engendrer des balayages spatiaux au moyen de faisceaux directifs coïncidants.

Le couple d'ondes $F_1$, $F_2$ caractéristique d'une balise est reçu par celle-ci avec réémission de l'onde corrélée correspondante $F_3 = F_1\text{-}F_2$. Les circuits résonants de cette balise étant accordés sur ce couple, les autres couples ne suscitent pas de réémission par ladite balise.

L'onde réémise $F_3$ est reçue et sélectivement détectée par l'ensemble interrogateur dont l'unité de contrôle et de calcul est chargée, pour chaque balise (caractérisée par ses fréquences), des informations concernant la position de celle-ci dans l'espace.

De plus, l'amplitude maximum de l'onde $F_3$ est détectée par l'ensemble-interrogateur, qui relève la direction d'émission correspondant à l'apparition de cette amplitude maximum par rapport à une direction de référence. Un signal de direction est alors engendré par l'unité de contrôle et de calcul.

Cette détection d'amplitude maximum de l'onde $F_3$ peut être assurée de façon omnidirectionnelle, le relèvement de la direction de la balise s'effectuant en relevant la direction des faisceaux directifs émis ($F_1$, $F_2$) à l'instant d'apparition de l'amplitude maximum.

Toutefois, cette détection est de préférence assurée au niveau du récepteur par une réception directive en coïncidence avec les balayages d'émission en vue d'accroître la précision des mesures. (De la même façon, il est possible de prévoir un seul faisceau directif d'émission $F_1$ (ou $F_2$), l'autre émission étant omnidirectionnelle ; cependant pour accroître la précision des mesures, les deux faisceaux d'émission seront de préférence prévus directifs et coïncidants).

Il est à noter que l'application ci-dessus décrite implique la présence de moyens de goniométrie parfaitement classiques, tant au niveau des antennes qu'au niveau de l'unité de calcul exploitant les données reçues.

Le processus ci-dessus décrit est répété avec les deux autres balises par émission des autres couples de fréquence ($F_1$, $F'_2$ ; $F_1$, $F''_2$) et détection de l'amplitude maximum de la fréquence corrélée correspondante, et la position de l'objet supportant l'ensemble-interrogateur est déduite, à chaque interrogation, des trois signaux de direction par un simple calcul de triangulation.

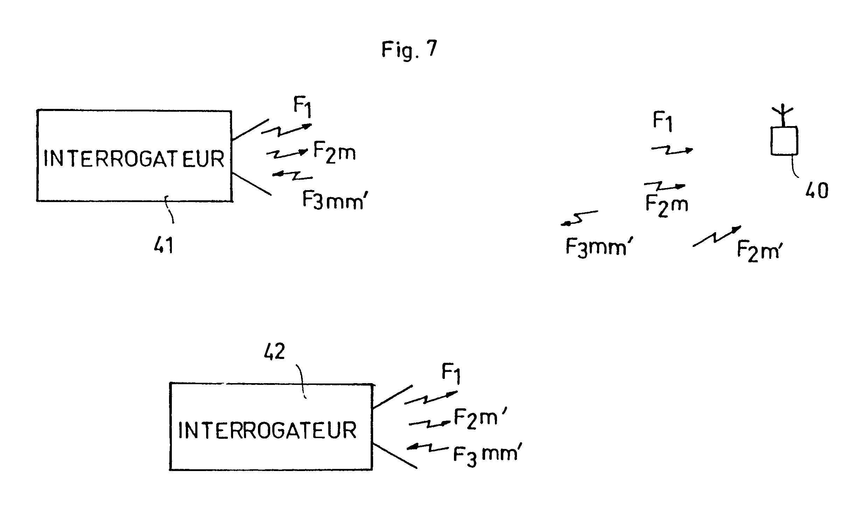

La figure 7 illustre le procédé d'identification d'une balise 40 par modulation des ondes de base, lorsque plusieurs ensembles-interrogateurs 41 et 42 interrogent celle-ci, simultanément ou non. On considèrera ci-après le cas d'une interrogation simultanée qui est le seul cas où se pose le problème d'affecter à chaque ensemble la réponse issue de sa propre interrogation.

La balise est caractérisée par ses fréquences de résonance $F_1$, $F_2$, $F_3$.

Chaque ensemble-interrogateur émet les ondes de base, de fréquence $F_1$ et $F_2$, mais avec des modulations différentes ; dans le mode de réalisation de l'ensemble-interrogateur déjà décrit, seule l'onde de base $F_2$ est modulée ; à la figure 7, les couples d'ondes ainsi émis sont désignés par $F_1$, $F_{2m}$ et $F_1$, $F_{2m'}$, l'onde corrélée correspondante étant désignée par $F_{3m''}$, dans le cas d'une émission simultanée par les ensembles 41 et 42 (cette onde $F_{3mm'}$ portant la somme des modulations des ondes de base $F_{2m}$ et $F_{2m'}$).

Chaque ensemble-interrogateur recevant l'onde corrélée $F_{3m'}$, (de fréquence $F_3$) extrait le signal de modulation de celle-ci qui est comparée dans son démodulateur à la modulation de l'onde de base émise ($F_{2m}$, $F_{2m'}$). Si cette modulation se retrouve dans le signal de modulation, le démodulateur engendre un signal de correspondance et le signal de présence est validé dans l'unité de contrôle et de calcul.

L'ensemble-interrogateur peut ainsi identifier une balise de caractéristique donnée ($F_1$, $F_2$) sans risque de perturbations dues à d'autres interrogations dans le même espace.

Il est ainsi possible de prévoir un groupe d'ensembles-interrogateurs (équipant des robots ou autres engins mobiles) qui interrogent dans un espace un réseau de balises pour se localiser par rapport à celles-ci après identification.

## Revendications

1. Système d'identification et/ou de localisation, doté d'au moins un ensemble interrogateur (1) et d'au moins une balise (2, 3, 4) :

– chaque balise (2, 3, 4) comprenant, d'une part, un système d'antenne de réception et de réémission (13-16) adapté pour recevoir au moins deux premières ondes de base de fréquences différentes ($F_1$, $F_2$) et pour réémettre au moins une troisième onde de fréquence ($F_3$) corrélée aux fréquences desdites ondes de base, mais différente desdites fréquences, d'autre part, un mélangeur de fréquence (17) comportant une diode (23), couplé audit système d'antenne et apte à mélanger au moins deux signaux correspondant auxdites premières ondes de base ($F_1$, $F_2$) pour délivrer vers ledit système d'antenne un signal de fréquence corrélée ($F_3$),

– chaque ensemble-interrogateur (1) comprenant des moyens (5, 6) d'émissions simultanées desdites au moins deux premières ondes de base de fréquences différentes ($F_1$, $F_2$), des moyens (10) de réception et de détection d'au moins ladite troisième onde de fréquence corrélée ($F_3$), et une unité de contrôle et de calcul (9) pour le traitement du signal issu des moyens de réception et de détection, ledit système d'identification et/ou de localisation étant caractérisé en ce que, d'une part, le système d'antenne de chaque balise est constitué de boucles conductrices distinctes (20, 21, 22) de dimensions adaptées pour former des circuits résonnants respectivement accordés sur les fréquences de base ($F_1$, $F_2$) et corrélée ($F_3$), et en ce que d'autre part, la diode (23) est reliée à toutes les boucles conductrices qui se referment sur ladite diode, de façon à constituer le mélangeur des fréquences de base ($F_1$, $F_2$) et à délivrer ce mélange dans la boucle accordée sur la fréquence corrélée ($F_3$) en vue de la réémission de l'onde de fréquence corrélée ($F_3$).

2. Système selon la revendication 1, dans lequel :
– chaque balise possède parmi ses boucles résonnantes une boucle accordée sur la fréquence corrélée ($F_3$) qui est égale à la différence des fréquences de base ($F_1$-$F_2$),
– chaque ensemble-interrogateur possède des moyens (10) de réception et de détection, accordés sur la fréquence corrélée ($F_3$) égale à la différence des fréquences de base ($F_1$-$F_2$).

3. Système selon l'une des revendications 1 ou 2, caractérisé en ce qu'un résonateur diélectrique à coefficient de surtension élevé (18, 25) est couplé à une des boucles résonnantes (15, 21) qui est accordée sur une des fréquences de base ($F_2$).

4. Système selon l'une des revendications 1, 2 ou 3, dont les moyens d'émissions simultanées sont constitués par deux émetteurs radiofréquences distincts couplés (5, 6), et les moyens de réception par un récepteur radiofréquence (10).

5. Système selon la revendication 4, comportant deux émetteurs radiofréquences couplés (5, 6), adaptés pour émettre plusieurs couples de fréquence ($F_1$, $F_2$ ; $F'_1$, $F'_2$...) caractéristiques des diverses balises, le récepteur radiofréquence (10) étant apte à recevoir une bande de fréquence contenant toutes les fréquences corrélées correspondantes ($F_3$, $F'_3$...).

6. Système selon la revendication 5, dans lequel un desdits émetteurs (5) est un émetteur à fréquence fixe constituée par la fréquence la plus élevée ($F_1$), l'autre émetteur (6) étant adapté pour générer plusieurs fréquences distinctes ($F_2$, $F'_2$...), afin d'émettre des couples de fréquences ($F_1$, $F_2$ ; $F_1$, $F'_2$...) ayant une fréquence commune.

7. Système selon l'une des revendications 5 ou 6, pour l'identification d'une balise dans un espace, caractérisé en ce qu'il comprend :
– un modulateur (8) associé à l'un des émetteurs radiofréquence (6) en vue d'émettre une onde de base modulée ($F_2$),
– un démodulateur (11) associé au récepteur radiofréquence (10) en vue d'extraire un signal de modulation de l'onde corrélée reçue et de le comparer à la modulation de l'onde de base modulée ($F_2$) en vue de délivrer un signal de correspondance,
– et en ce que l'unité de contrôle et de calcul (9), est adaptée pour recevoir le signal de correspondance issu du démodulateur (11) et délivrer un signal de présence en cas de réception significative d'une onde corrélée ($F_3$) de même modulation que l'onde de base ($F_2$).

8. Système selon l'une des revendications 1, 2, 3, 4, 5 ou 6 ou 7, dans lequel les moyens d'émissions et/ou moyens de réception de l'ensemble interrogateur comprennent une antenne directive.

9. Balise apte à recevoir deux ondes à deux fréquences de base ($F_1$, $F_2$) et à réémettre une onde d'identification et/ou de localisation, caractérisé en ce qu'elle est constituée par trois boucles conductrices résonnantes de tailles différentes se refermant par deux connections sur une diode mélangeuse commune (23), les trois boucles (20, 21, 22) ayant des longueurs respectivement liées aux deux fréquences de base reçues ($F_1$, $F_2$) et à la fréquence de l'onde réémise, fréquence égale à la différence de ces fréquences de base ($F_3 = F_1$-$F_2$), de façon à former des circuits résonnants accordés sur ces valeurs de fréquences.

10. Balise apte à recevoir deux ondes de fréquences de base ($F_1$, $F_2$) telles que $n_2F_1 = n_1F_2$ où $n_1$ et $n_2$ sont des nombres entiers et à réémettre une onde d'identification et/ou de localisation, caractérisé en ce qu'elle est constituée par deux boucles résonnantes (31, 32) de tailles différentes se refermant sur une diode mélangeuse commune (33), les longueurs des deux boucles étant des multiples entiers d'une même longueur de façon à former des circuits résonnants respectivement accordés sur les fréquences de base ($F_1$, $F_2$) et sur la fréquence de l'onde réémise ($F_3$), fréquences telles que : $F_3 = F_1$-$F_2$,

11. Balise selon l'une des revendications 9 ou 10, caractérisée en ce que les boucles (20, 21, 22 ; 31, 32) sont constituées par un circuit imprimé sur lequel a été rapportée la diode (23), au moins un résonateur diélectrique (25) étant fixé à proximité d'une des boucles (21).

12. Balise selon l'une des revendications 9, 10 ou 11, caractérisée en ce qu'un réflecteur d'ondes (26, 27) est associé à chaque boucle et disposé parallèlement au plan de ladite boucle à une distance de celle-ci telle que l'onde réfléchie par le réflecteur soit en phase avec l'onde directe.

13. Balise selon la revendication 12, caractérisée en ce que les boucles (20, 21, 22) sont situées dans un même plan et en ce que ladite balise comprend un ou des réflecteurs d'ondes (26, 27) disposés parallèlement au plan desdites boucles à distance telle que les ondes réfléchies soient en phase avec les ondes directes.

**Ansprüche**

1. Erkennungs- und/oder Ortungssystem, welches mit mindestens einer Abfragegruppe (1) und mindestens einer Markierung (2, 3, 4) versehen ist :

• wobei jede Markierung (2, 3, 4) einerseits ein Empfangsund Reemissionsantennensystem (13-16), das für den Empfang von mindestens zwei ersten Basiswellen unterschiedlicher Frequenzen ($F_1$, $F_2$) und für die Reemission von mindestens einer dritten Welle einer mit den Frequenzen der Basiswellen korrelierten, aber von diesen Frequenzen unterschiedlichen Frequenz ($F_3$) ausgelegt ist, und andererseits einen Frequenzmischer (17) mit einer Diode (23) umfaßt, welcher an das Antennensystem geschaltet ist und mindestens zwei den ersten Basiswellen ($F_1$, $F_2$) entsprechende Signale zum Entsenden eines Signals korrelierter Frequenz ($F_3$) zum Antennensystem mischen kann,

• wobei jede Abfragegruppe (1) Mittel (5, 6) für Simultanemissionen der mindestens zwei ersten Basiswellen unterschiedlicher Frequenzen ($F_1$, $F_2$), Mittel (10) zum Empfang und zur Detektion von mindestens der dritten Welle korrelierter Frequenz ($F_3$) und eine Kontroll- und Recheneinheit (9) zur Aufbereitung des Ausgangssignals der Empfangs- und Detektionsmittel umfaßt, welches Erkennungs- und/oder Ortungssystem dadurch gekennzeichnet ist, daß einerseits das Antennensystem jeder Markierung von separaten Leiterschleifen (20, 21, 22) mit Dimensionen gebildet ist, die zur Bildung von auf die Basisfrequenzen ($F_1$, $F_2$) bzw. die Korrelationsfrequenz ($F_3$) abgestimmten Resonanzkreisen ausgelegt sind, und daß andererseits die Diode (23) mit sämtlichen sich wieder über der Diode schließenden Leiterschleifen derart verbunden ist, daß der Mischer der Basisfrequenzen ($F_1$, $F_2$) gebildet wird und diese Mischung zwecks Reemission der Welle korrelierter Frequenz ($F_3$) in die auf die Korrelationsfrequenz ($F_3$) abgestimmte Schleife gesendet wird.

2. System nach Anspruch 1, bei welchem :
– jede Markierung unter ihren Resonanzschleifen eine Schleife besitzt, die auf die Korrelationsfrequenz ($F_3$) abgestimmt ist, welche gleich der Differenz der Basisfrequenzen ($F_1$-$F_2$) ist,
– jede Abfragegruppe Empfangs- und Detektionsmittel (10) besitzt, die abgestimmt sind auf die Korrelationsfrequenz ($F_3$) gleich der Differenz der Basisfrequenzen ($F_1$-$F_2$).

3. System nach einem der Ansprüche 1 oder 2, dadurch gekennzeichnet, daß ein dielektrischer Resonator (18, 25) mit erhöhtem Überspannungskoeffizienten an eine der Resonanzschleifen (15, 21), die auf eine der Basisfrequenzen ($F_2$) abgestimmt ist, gekoppelt ist.

4. System nach einem der Ansprüche 1, 2 oder 3, bei dem die Simultanemissionsmittel durch zwei separate, gekoppelte Hochfrequenzemitter (5, 6) und die Empfangsmittel durch einen Hochfrequenzempfänger (10) gebildet sind.

5. System nach Anspruch 4 mit zur Emission mehrerer für verschiedene Markierungen charakteristischer Frequenzpaare ($F_1$, $F_2$ ; $F'_1$, $F'_2$,...) ausgelegten gekoppelten Hochfrequenzemittern (5, 6), wobei der Hochfrequenzempfänger (10) ein Frequenzband empfangen kann, welches alle entsprechenden Korrelationsfrequenzen ($F_3$, $F'_3$,...) enthält.

6. System nach Anspruch 5, bei welchem einer der Emitter (5) ein Emitter mit aus der höchsten Frequenz ($F_1$) gebildeter Festfrequenz ist, wobei der andere Emitter (6) zur Erzeugung mehrerer unterschiedlicher Frequenzen ($F_2$, $F'_2$,...) ausgelegt ist, um Frequenzpaare ($F_1$, $F_2$ ; $F'_1$, $F'_2$,...) mit einer gemeinsamen Frequenz zu emittieren.

7. System nach einem der Ansprüche 5 oder 6 zur Erkennung einer Markierung in einem Raum, dadurch gekennzeichnet, daß es umfaßt :
– einen mit einem der Hochfrequenzemitter (6) kombinierten Modulator (8) zur Emission einer modulierten Basiswelle ($F_2$),
– einen mit dem Hochfrequenzempfänger (10) kombinierten Demodulator (11) zur Extraktion eines Modulationssignals aus der empfangenen Korrelationswelle und zum Vergleich desselben mit der Modulation der modulierten Basiswelle ($F_2$) zwecks Entsendung einen Zuordnungssignals,
– und daß die Kontroll- und Recheneinheit (9) für den Empfang des vom Demodulator (11) entsendeten Zuordnungssignals und zur Entsendung eines Anwesenheitssignals im Fall eines für eine Korrelationswelle ($F_3$) derselben Modulation wie die Basiswelle ($F_2$) signifikanten Empfangs ausgelegt ist.

8. System nach einem der Ansprüche 1, 2, 3, 4, 5 oder 6 oder 7, bei welchem die Emissions- und/oder Empfangsmittel der Abfragegruppe eine Richtantenne umfassen.

9. Markierung, geeignet zum Empfang zweier Wellen mit zwei Basisfrequenzen ($F_1$, $F_2$) und zur Reemission einer Erkennungs- und/oder Ortungswelle, dadurch gekennzeichnet, daß sie durch drei Resonanzleiterschleifen unterschiedlicher Größen gebildet ist, die sich mittels zweier Verbindungen über einer gemeinsamen Mischdiode (23) schließen, welche drei Schleifen (20, 21, 22) mit den beiden empfangenen Basisfrequenzen ($F_1$, $F_2$) bzw. der Frequenz der reemittierten Welle, welche Frequenz gleich der Differenz dieser Basisfrequenzen

9

($F_3 = F_1-F_2$) ist, verbundene Längen aufweisen, sodaß sie auf diese Frequenzwerte abgestimmte Resonanzkreise bilden.

10. Markierung, geeignet zum Empfang zweier Wellen mit derartigen Basisfrequenzen ($F_1$, $F_2$), daß $n_2 F_1 = n_1 F_2$, worin $n_1$ und $n_2$ ganze Zahlen sind, und zur Reemission einer Erkennungs- und/oder Ortungswelle, dadurch gekennzeichnet, daß sie durch zwei Resonanzschleifen (31, 32) unterschiedlicher Größen gebildet ist, die sich über einer gemeinsamen Mischdiode (33) schließen, wobei die Längen der beiden Schleifen ganze Vielfache ein- und derselben Länge sind, sodaß sie Resonanzkreise bilden, die auf die Basisfrequenzen ($F_1$, $F_2$) bzw. auf die Frequenz der Reemissionswelle ($F_3$) abgestimmt sind, für welche Frequenzen gilt: $F_3 = F_1-F_2$.

11. Markierung nach einem der Ansprüche 9 oder 10, dadurch gekennzeichnet, daß die Schleifen (20, 21, 22 ; 31, 32) durch eine gedruckte Schaltung gebildet sind, auf welche die Diode (23) aufgesteckt ist, wobei mindestens ein dielektrischer Resonator (25) nahe einer Schleife (21) fixiert ist.

12. Markierung nach einem der Ansprüche 9, 10 oder 11, dadurch gekennzeichnet, daß ein Wellenreflektor (26, 27) mit jeder Schleife kombiniert und parallel zur Ebene der Schleife in einem bestand von derselben angeordnet ist, daß die vom Reflektor reflektierte Welle mit der direkten Welle phasengleich ist.

13. Markierung nach Anspruch 12, dadurch gekennzeichnet, daß die Schleifen (20, 21, 22) in ein- und derselben Ebene liegen und daß die Markierung einen oder mehrere Wellenreflektor(en) (26, 27) umfaßt, die parallel zur Ebene der Schleifen in einem Abstand angeordnet sind, daß die reflektierten Wellen mit den direkten Wellen phasengleich sind.

## Claims

1. System for identification and/or position-finding, equipped with at least one interrogation unit (1) and at least one beacon (2, 3, 4):
   - each beacon (2, 3, 4) comprising, on the one hand, a reception and re-transmission antenna system (13-16) designed to receive at least the first two fundamental waves of different frequencies ($F_1$, $F_2$) and to re-transmit at least a third frequency wave ($F_3$) correlated to the frequencies of said fundamental waves, but different from said frequencies, and, on the other hand, a frequency mixer (17) comprising a diode (23) coupled to said antenna system and capable of mixing at least two signals corresponding to said first two fundamental waves ($F_1$, $F_2$) so as to deliver a correlated frequency signal ($F_3$) to said antenna system,
   - each interrogation unit (1) comprising means (5, 6) for the simultaneous transmission of said at least two first different fundamental frequency waves ($F_1$, $F_2$), means (10) for the reception and detection at least of said third correlated freqency wave ($F_3$) and a monitoring and computing unit (9) to process the signal delivered by the means of reception and detection, said identification and/or position-finding system being characterized in that, firstly, the antenna system of each beacon consists of separate conductor loops (20, 21, 22) suitably dimensioned to form resonating circuits tuned respectively to the fundamental ($F_1$, $F_2$) and correlated ($F_3$) frequencies, and in that, secondly the diode (23) is connected to all the conductive loops which close over said diode in order to constitute the mixer for the fundamental frequencies ($F_1$, $F_2$) and to deliver this mixed frequency to the loop tuned to the correlated frequency ($F_3$) for the purpose of re-transmission of the correlated frequency wave ($F_3$).

2. System in accordance with claim 1, in which :
   – each beacon includes among its resonant loops, a loop tuned to the correlated frequency ($F_3$) which is equal to the difference between the fundamental frequencies ($F_1-F_2$),
   – each interrogation unit possesses means (10) of reception and detection, tuned to the correlated frequency ($F_3$) equal to the difference between the fundamental frequencies ($F_1-F_2$).

3. System in accordance with one of the claims 1 or 2, characterized in that a dielectric resonator with a high surge voltage coefficient (18, 25) is coupled to one of the resonant loops (15, 21) which is tuned to one of the fundamental frequencies ($F_2$).

4. System in accordance with one of the claims 1, 2 or 3 whose means of simultaneous transmission consists of two separate coupled radio-frequency transmitters (5, 6) while the means of reception consists of a radio- frequency receiver (10).

5. System in accordance with claim 4, comprising two coupled radiofrequency transmitters (5, 6) designed to transmit several frequency pairs ($F_1$, $F_2$ ; $F'_1$, $F'_2$...) specific to the different beacons, the radio-frequency receiver (10) being capable of receiving a frequency band containing all the corresponding correlated frequencies ($F_3$, $F'_3$...).

6. System in accordance with claim 5 in which one of said transmitters (5) is a transmitter operating on a fixed frequency constituted by the highest frequency ($F_1$ ), the other transmitter (6) being designed to generate several separate frequencies ($F_2$, $F'_2$...) in order to transmit frequency pairs ($F_1$, $F_2$ ; $F'_1$, $F'_2$...) which share a

common frequency.

7. System in accordance with claim 5 or 6 for the identification of a beacon in a particular space, characterized in that it comprises :

– a modulator (8) associated with one of the radio-frequency transmitters (6) in order to transmit a modulated base wave ($F_2$),

– a demodulator (11) associated with the radio-frequency receiver (10) in order to extract a modulation signal from the received correlated wave and compare it with the modulation of the modulated base wave ($F_2$) so as to deliver a correspondence signal,

– and in that the monitoring and computing unit (9) is designed to receive the correspondence signal from the demodulator (11) and deliver a presence signal in the event of significant reception of a correlated wave ($F_3$) with modulation identical to that of the fundamental wave.

8. System in accordance with one of the claims 1, 2, 3, 4, 5 or 6 or 7, in which the means of transmission and/or the means of reception of the interrogating unit comprise a directional antenna.

9. Beacon designed to receive two waves with two fundamental frequencies ($F_1$, $F_2$) and re-transmit an identification and/or position-finding wave, characterized in that it consists of three resonant conductive loops of different sizes closing by means of two connexions onto a common mixing diode (23), the three loops (20, 21, 22) having lengths linked respectively to the two received fundamental frequencies ($F_1$, $F_2$) and to the frequency of the re-transmitted wave, said frequency being equal to the difference between these two fundamental frequencies ($F_3$ = $F_1$-$F_2$) so as to form resonant circuits tuned to these frequency values.

10. Beacon designed to receive two fundamental frequency waves ($F_1$, F) such that $n_2F_1$ = $n_1F_2$, $n_1$ and $n_2$ being whole numbers, and to retransmit an identification and/or position-finding wave characterized in that it consits of two resonant loops (31, 32) of different sizes closing over a common mixing diode (33), the lengths of the two loops being whole multiples of identical length in order to form resonant circuits tuned respectively to the fundamental frequencies ($F_1$, $F_2$) and to the frequency of the re-transmitted wave ($F_3$), frequencies such that $F_3$ = $F_1$-$F_2$.

11. Beacon in accordance with one of the claims 9 or 10, characterized in that the loops (20, 21, 22 ; 31, 32) consists of a printed circuit on which the diode (23) has been inserted, at least one dielectrical resonator (25) being mounted in the immediate vicinity of one of the loops (21).

12. Beacon in accordance with one of the claims 9, 10 or 11, characterized in that a wave reflector (26, 27) is associated with each loop and arranged parallel to the plane of said loop at a distance from the latter such that the wave reflected by the reflector is in phase with the direct wave.

13. Beacon in accordance with claim 12, characterized in that the loops (20, 21, 22) are situated on the same plane and in that said beacon comprises one or more wave reflectors (26, 27) arranged in parallel to the plane of said loops at a distance such that the reflected waves are in phase with the direct waves.

Fig.1

Fig. 3

Fig.2

Fig. 5

Fig. 4

Fig. 6

EP 0 341 254 B1

EP 0 341 254 B1

Fig. 7

INTERROGATEUR

$F_1$

$F_2m$

$F_3mm'$

41

$F_1$

$F_2m$

$F_3mm'$

$F_2m'$

40

42

INTERROGATEUR

$F_1$

$F_2m'$

$F_3mm'$